# EUROPÄISCHE PATENTSCHRIFT

(11) **EP 4 268 155 B1**
(45) Veröffentlichungstag und Bekanntmachung des Hinweises auf die Patenterteilung: **14.10.2026**
(21) Anmeldenummer: 21845020.3
(22) Anmeldetag: 23.12.2021
(51) Int. Cl.: G06Q 10/00, F25D 27/00

(54) **SYSTEM FÜR DIE ECHTHEITSPRÜFUNG VON PRODUKTEN**
PRODUCT AUTHENTICITY TESTING SYSTEM
SYSTÈME DE CONTRÔLE D'AUTHENTICITÉ DE PRODUITS

(30) Priorität: 23.12.2020 EP 20216867
(43) Veröffentlichungstag der Anmeldung: 01.11.2023
(73) Patentinhaber: Red Bull GmbH, 5330 Fuschl am See (AT)
(72) Erfinder: SONNLEITNER, Hermann, 3352 St. Peter/Au (AT); NACHBAGAUER, Josef, 5330 Fuschl am See (AT); CONCIN, Roland, 5330 Fuschl am See (AT); MAYRHUBER, Harald, 5330 Fuschl am See (AT)
(74) Vertreter: Burger, Hannes
(86) Internationale Anmeldenummer: PCT/EP2021/087482
(87) Internationale Veröffentlichungsnummer: WO 2022/136639

(56) Entgegenhaltungen:
- EP-A1- 2 975 343
- EP-A1- 2 975 344
- WO-A1-2013/188897
- WO-A1-2020/149454
- CN-A- 109 171 321
- CN-A- 111 698 394
- CN-A- 111 698 395
- DE-A1- 102018 103 135
- JP-A- 2019 086 282
- KR-A- 20200 110 026
- US-A- 3 039 583
- US-A1- 2016 138 782
- US-A1- 2017 219 276
- US-A1- 2017 262 973
- US-A1- 2018 245 840
- US-B1- 9 965 798

## Beschreibung

Die Erfindung betrifft ein System für die Echtheitsprüfung von Produkten.

Insbesondere bei Produkten, welche von einem Erstanbieter aus in mehreren Stufen von jeweiligen Anbietern zu jeweiligen Abnehmern weitergegeben werden, besteht seitens allen rechtmäßig Beteiligten der Wunsch, überprüfen zu können, ob das jeweils aktuell vorliegende Produkt auch tatsächlich von dem angegebenen Erstanbieter stammt und nicht eine Fälschung darstellt. Klassischerweise wurden dazu Produkte -vor allem Produktverpackungen - mit zumindest einem Zusatzmerkmal ausgestattet, welches nicht auffällig ist, dessen Vorhandensein für Wissende aber doch überprüfbar ist, und welches nach Möglichkeit nicht ganz einfach zu kopieren ist.

Seit mehreren Jahren werden vermehrt Verfahren vorgeschlagen, bei denen zur Echtheitsprüfung elektronische Datenverarbeitung, oftmals in Kombination mit digitaler Datenübertragung über ein Datenübertragungsnetz, angewandt wird. Dazu mehrere Beispiele: US 9 965 798 B1 beschreibt ein Kühlschranksystem und ein Verfahren zur Beratung der Diät eines Benutzers. Das System verfügt dabei über einen Kühlschrank mit einer Beleuchtung und einer Kamera, die ein Bild vom Inhalt des Kühlschranks erfasst. Die Bilder werden von einer Grafikprozessoreinheit (GPU) verarbeitet, die in den Kühlschrank oder einen Cloud-Server integriert ist. Der Prozessor analysiert das Bild, um eine Menge, Qualität oder eine Art von Lebensmitteln wie Gemüse, Obst, Getränke usw. zu erkennen.

Gemäß der EP 2862131 A1 wird eine Ware mit zwei Identifizierungsmerkmalen versehen, wovon das eine Merkmal offensichtlich lesbar ist (beispielsweise ein QR-Code) und das zweite Merkmal ein nicht offensichtlich lesbares aber eindeutiges Merkmal ist, beispielsweise ein Farbengewirr, bei welchem die letztendlich bedeutende Information in der Anordnung von wenigen Farbpunkten in einem engen, unauffälligen Farbspektrum liegt und aus einem speziellen Blickwinkel heraus gelesen werden muss. Das Auslesen der Merkmale erfolgt mittels eines speziellen Lesegerätes. Zum Nachweis der Echtheit der Ware muss die aus dem offensichtlich lesbaren Merkmal gewonnene Information mit der richtig gelesenen Information aus dem nicht offensichtlich lesbaren Merkmal zusammenpassen.

In der EP 2894596 A1 wird vorgeschlagen, Ware (bzw. eine Warenverpackung) mit einem eindeutigen Identifikationsmerkmal auszustatten, welches in einer Datenbank registriert ist, sowie mobile Geräte (z.B. Smartphones) vorzusehen, durch welche an der Ware das Identifikationsmerkmal gelesen werden kann und einschließlich Information über den geografischen Ort, an welchem das Lesen stattfindet, an die Datenbank gesandt wird. In der Datenbank werden die Daten bezüglich des Ortes des Produktes zum betreffenden Zeitpunkt notiert und anhand von Informationen, die in der Datenbank zu dem Identifizierungsmerkmal hinterlegt sind, wird überprüft, ob der angegebene Ort des Lesens für die betreffende Ware plausibel ist oder nicht, und dementsprechend darauf geschlossen, ob die Ware echt ist oder nicht.

Gemäß den Schriften EP 2990988 A1, EP 3154015 A1, EP 3179441 A1, EP 3189465 A1 EP 3510527 A1, EP 3564840 A1 wird eine Ware jeweils mit (mindestens) zwei lesbaren Merkmalen ausgestattet, wobei ein Merkmal offensichtlich und leicht lesbar ist, und das zweite Merkmal nicht ohne weiteres lesbar und eventuell auch nicht ohne weiteres bemerkbar ist, und wobei die Information aus beiden Merkmalen als zusammengehörig in einer Datenbank hinterlegt sind. Zur Überprüfung einer Ware werden die von einem Lesegerät festgestellten beiden Informationen an die Datenbank gesandt und diese meldet zurück, ob die beiden Informationen zusammengehören, was bedeutet, dass die Ware echt ist, oder ob dem nicht so ist.

An jenen bislang vorgeschlagenen Echtheits-Überprüfungsverfahren, welche auslesbare Merkmale und elektronische Datenverarbeitung anwenden, ist nachteilig, dass sie individuell durch Menschen initiierte Überprüfungsvorgänge und das Hantieren mit separaten Lesegeräten erfordern. Die Höhe des damit verbundenen Aufwandes führt letztendlich dazu, dass die Überprüfungsverfahren nur an einem störend kleinen Anteil von Waren als wirksames Mittel gegen Produktfälschung wirklich angewandt werden.

Durch die JP 2001208463 A wird schon im Jahr 2001 öffentlich vorgeschlagen, einen Kühlschrank mit elektronischen Kameras für seinen Innenraum auszustatten, sowie mit Software und Datennetzanschlüssen, um aus den von den Kameras erstellten Bildaufnahmen durch automatisierte Bilderkennung die im Kühlschrank gelagerten Güter zu identifizieren und diese Information automatisiert einer ggf. auch weit entfernt befindlichen berechtigten Person bereitzustellen, damit diese weiß, was einzukaufen ist oder gekocht werden kann.

Auf die JP 2001208463 A folgend gibt es eine Vielzahl von Patentveröffentlichungen, welche auf der gleichen Grundidee aufbauen und sich zu dieser in Teilthemen vertiefen, wie z.B. Anordnungen der Kameras, Herbeischaffung des Hintergrundwissens für die Identifikation, Details der Bildverarbeitung, Erstellung von Vorschlägen für die Verwendung des Inhalts ("Diätratgeber"), Frischewarnmeldungen etc. Beispielhaft sei dazu auf die Schriften CN 103604271 A, CN 104361041 B, CN 105758108 A, CN 106247752 A, CN 106642976 A, CN 106642981 A, CN 109114877 A, CN 206817873 U, CN 208704296 U, TW 201816737 A, US 2018245840 A1, US 2019226755 A1, US 9784497 B2, WO 2015024841 A1 und WO 2018142022 A1 hingewiesen.

Für die Hersteller und Lieferanten von Waren, mit denen ein derartig ausgestatteter Kühlschrank zu befüllen ist, blieb das Thema "automatische Erstellung und Bereitstellung von Informationen über den Inhalt eines Kühlschranks" bislang ohne Nutzen. Scheinbar haben sich jene Fachleute, welche derartige Kühlschränke entwickeln, immer nur auf jene Marktteilnehmer hin ausgerichtet, welche zu kühlende Waren verbrauchen, und nicht auch auf jene, welche diese Waren anbieten.

Die der Erfindung zu Grunde liegende Hauptaufgabe besteht darin, jenen Zusatzaufwand zu vermindern, der bei Abnehmern von Produkten dann anfällt, wenn sie die Echtheit von Produkten überprüfen wollen. Weiters sollen bei einem höheren Anteil von bei Abnehmern ankommenden Produkten als dies bisher der Fall ist, eine Echtheitsprüfung durchgeführt werden und Informationen über die Position des Produktes zum jeweiligen Zeitpunkt an berechtigte Lieferanten oder Hersteller gesandt werden.

Die hier vorgeschlagene Lösung der Aufgabe beschränkt sich auf verpackte Lebensmittel, welche in Kühlschränken aufzubewahren sind. Auslösend für die Erfindung ist die Kombination der Erkenntnisse, dass für derartige Produkte der erzielbare Wissensgewinn besonders wertvoll ist, und dass die technische Umsetzung der Lösung überraschend einfach möglich ist.

Erfindungsgemäß wird zu diesen Produkten vorgeschlagen, die vor Ort erforderlichen Mittel für die Echtheitsprüfung der Produkte und die vor Ort erforderlichen Mittel für die Beschaffung der an eine Datenbank (-des Warenanbieters -) zu sendenden Information über die Produkte in jenen Kühlschränken anzubringen, in welchen die Produkte aufzubewahren sind, und die für die genannten Zwecke vor Ort durchzuführenden Verfahrensschritte auch automatisiert im Kühlschrank durchzuführen. ("Im Kühlschrank" bedeutet in diesem Zusammenhang, dass die besagten Mittel Teil jenes Gerätes sind, welches auch den Kühlraum für die Produkte und die Aggregate für die Kühlung umfasst.)

Ein besonderer Vorteil der vorgeschlagenen Lösung besteht darin, dass die Mittel zur Realisierung in jenen bekannten Kühlschränken, welche die Kühlschrankbenutzer automatisiert über den Kühlschrankinhalt informieren, überwiegend schon vorhanden sind. Damit ist sehr wenig Zusatzaufwand erforderlich, um diese Kühlschränke auch erfindungsgemäß zu nutzen, und es kann in hohem Maß auf bestehende Entwicklungen und bestehendes Know-how aufgebaut werden.

Die Erfindung wird an Hand stilisierter Zeichnungen zu beispielhaften Ausführungsvarianten veranschaulicht und näher erläutert:
- Fig. 1:: ist eine schematische Darstellung von für das beispielhafte Verwirklichen der Erfindung wesentlichen Elementen.
- Fig. 2:: zeigt in seitlicher Schnittansicht einen Ausschnitt eines beispielhaften erfindungsgemäß ausgestatteten Kühlschranks.
- Fig. 3:: zeigt eine schematische Darstellung von für das beispielhafte Verwirklichen der Erfindung wesentlichen Elementen, wenn die Erfindung mit einer Vorrichtung für die Rücknahme von Verpackungen kombiniert wird.
- Fig. 4:: zeigt eine stilisierte Darstellung eines ersten speziellen, erfindungsgemäß verwendbaren Regalfachs in seitlicher Teilschnittansicht.
- Fig. 5:: zeigt das Regalfach von Fig. 4 auch etwas stilisiert von oben.
- Fig. 6:: zeigt eine stilisierte Darstellung eines zweiten speziellen, erfindungsgemäß verwendbaren Regalfachs in frontaler Teilschnittansicht einschließlich einem auf dem Regalfach befindlichen Produkt.

Ein System zur Echtheitsprüfung eines Produktes umfasst zumindest einen Kühlschrank, ein mit einer Kennzeichnung versehenes Produkt, einen in dem Kühlschrank angeordneten Detektor zum Erfassen der Kennzeichnung sowie zumindest eine Information über das Produkt enthaltende Datenbank.

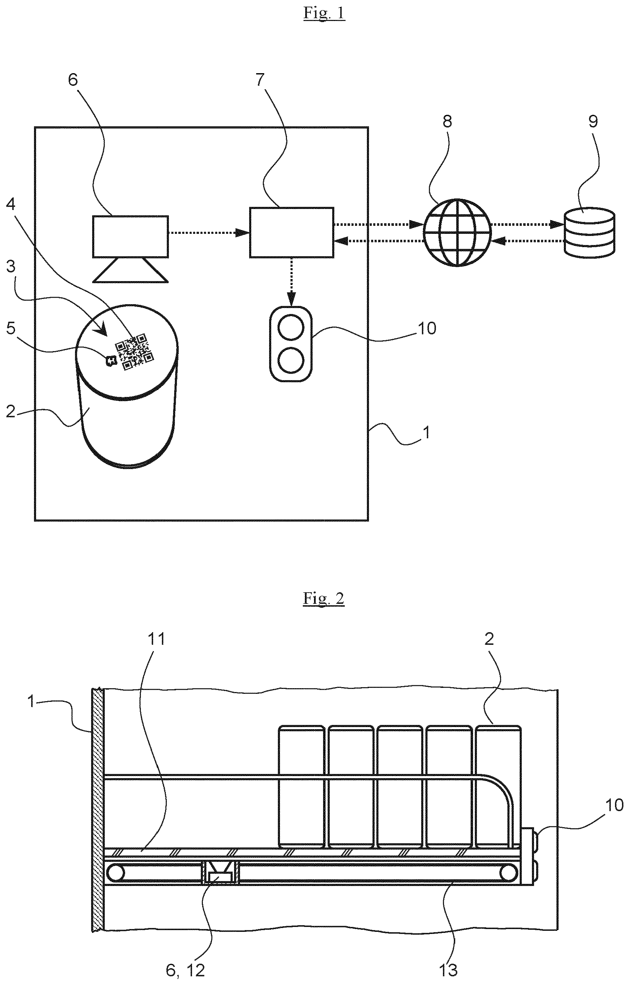

Fig. 1 symbolisiert unter anderem einen Kühlschrank 1, in dessen Kühlbereich sich ein Produkt 2 befindet, welches typischerweise aus einem Lebensmittel und einer dieses umhüllenden Verpackung besteht. Das Produkt 2 ist mit einer Kennzeichnung 3 versehen, welche beispielhaft aus einem offensichtlichen Kennzeichnungselement 4 (typischerweise einem QR-Code) und einem verschlüsselten Kennzeichnungselement 5 besteht.

Die Kennzeichnung 3 ist auf das Produkt 2 aufgebracht. Das Aufbringen der Kennzeichnung kann beispielsweise während des Produktionsprozesses erfolgen.

Das Produkt 2 kann typischerweise eine Getränkedose sein und der Kühlschrank 1 kann typischerweise in einer Lokalität stehen, von welcher Endverbraucher das Produkt 2 erhalten können.

Im Kühlschrank 1 befindet sich weiters ein Detektor 6 -typischerweise eine Kamera -, welcher dazu in der Lage ist, jene physikalischen Eigenschaften, welche die relevante Information der Kennzeichnung 3 bedeuten, zu detektieren.

Im oder am Kühlschrank 1 befindet sich eine lokale Steuerungs-und Kommunikationseinheit 7, welche die vom Detektor 6 detektierte Information empfängt und diese einschließlich einer Identifikationsinformation für die Steuerungs-und Kommunikationseinheit 7 selbst, in Form von digitalen Daten, über ein Informationsnetzwerk 8 an eine Datenbank 9 sendet, welche auch weit entfernt vom Kühlschrank 1 stehen kann.

Das Informationsnetzwerk 8 ist typischerweise das Internet, zu welchem in dieser Beschreibung auch die erforderlichen lokalen Verbindungsknoten zugezählt werden. Inhaber der Datenbank 9 ist typischerweise eine in der Lieferkette für das Produkt 2 weit oben befindliche zentrale Institution, wie beispielsweise der Hersteller des Produktes 2 oder ein Großhändler für das Produkt 2.

Die Datenbank 9 ist spätestens bei der Auslieferung von Produkten 2 von zentralen Stellen der Lieferkette weg an nachfolgende Stellen der Lieferkette mit Daten bezüglich der einzelnen Einheiten des Produktes 2 (z.B. der einzelnen Getränkedosen) gespeist worden. Ein Datensatz, welcher das Produkt 2 betrifft, beinhaltet zumindest Angaben über die Art des Produktes und die aus der Kennzeichnung 3 auf der Produktverpackung ablesbare Information, vorzugsweise auch Informationen über Zeiten zu Herstellung und Auslieferung und zum Distributionskanal.

Nachdem die Datenbank 9 von einer individuellen Steuerungs-und Kommunikationseinheit 7 eine aus einer Kennzeichnung 3 an einem Produkt 2 gelesene kennzeichnende Information zugesandt bekommen hat, gleicht sie diese Information mit ggf. schon vorliegenden Informationen zu der erhaltenen kennzeichnenden Information ab und sendet über das Informationsnetzwerk 8 Information an die Kommunikationseinheit 7 zurück, durch welche die Echtheit des Produktes 2 entweder bestätigt oder verneint wird.

Im Detail gibt es bekanntermaßen - und wie eingangs an Hand des Standes der Technik beispielhaft erwähnt - viele verschiedene bekannte Methoden der Echtheitsprüfung. Gemäß dem in Fig. 1 skizzierten optionalen Beispiel umfasst die Kennzeichnung 3 ein offensichtliches - also leicht zu erkennendes und auch leicht zu fälschendes - Kennzeichnungselement 4 und ein verschlüsseltes Kennzeichnungselement 5, wobei das verschlüsselte Kennzeichnungselement 5 schwierig zu fälschen ist und bei welchem Außenstehenden zumeist nicht einmal klar ist, in welchen physikalischen Eigenschaften die relevante kennzeichnende Information liegt. In der Datenbank 9 sind der Inhalt des offensichtlichen Kennzeichnungselementes 4 und der Inhalt des verschlüsselten Kennzeichnungselementes 5 als zusammengehörig hinterlegt. Wenn aus den von der Steuerungs-und Kommunikationseinheit 7 an die Datenbank 9 gesandten Information durch die Datenbank 9 erkennbar ist, dass der Inhalt des offensichtlichen Kennzeichnungselementes 4 und der Inhalt des verschlüsselten Kennzeichnungselementes 5 mit diesbezüglichen Inhalten eines hinterlegten Datensatzes übereinstimmen, ist dies ein Hinweis auf die Echtheit des Produktes 2, sodass die Echtheit bestätigt werden kann. Im gegenteiligen Fall ist das ein Hinweis darauf, dass das Produkt 2 eine Fälschung ist. Zusätzlich zur Echtheitsbestätigung bzw. Verneinung derselben am Ort des Produktes wird Nutzen generiert, indem in der Datenbank 9 gespeichert wird, von welcher Steuerungs- und Kommunikationseinheit 7 aus - und damit von welchem Kühlschrank 1 aus -, das Vorhandensein eines bestimmten Produktes 2 gemeldet wird. Damit lässt sich überwachen, wann welche Produkte 2 wo ankommen und wann sie von dort wieder wegkommen. Diese Information, welche praktisch ohne Zusatzaufwand als Nebeneffekt anfällt, ist für die Kontrolle und Optimierung von Logistik und Vertriebsstrukturen sehr wertvoll.

Nachdem die von der Datenbank 9 stammende, die Echtheit des Produktes 2 bestätigende Information bei der Steuerungs-und Kommunikationseinheit 7 im bzw. am Kühlschrank 1 angekommen ist, schaltet diese dementsprechend ein in bzw. am Kühlschrank 1 befindliches Signalelement 10 auf "Echtheit bestätigt" oder z.B. "Echtheit kann nicht bestätigt werden". In einem einfachen Fall kann dieses Signalisieren durch ein grünes bzw. rotes Licht erfolgen.

Optional kann das Signalelement 10 auch mit mehr Darstellungsfunktionen ausgestattet werden - beispielsweise indem es als Bildschirm ausgeführt wird - und für die Ausgabe weiterer Informationen dienen, typischerweise für Hintergrundinformationen die zu dem Produkt 2 in der Datenbank 9 hinterlegt sind und über die Steuerungs-und Kommunikationseinheit 7 empfangen werden. Wie weiter unten näher ausgeführt könnten diese Hintergrundinformationen ggf. auch an anderer Stelle erkannte Produktmängel oder Informationen zu einem Produktrückruf beinhalten.

Von erfindungsgemäß wesentlicher Bedeutung ist, dass der für die Echtheitsbestätigung am Ort des betroffenen Produktes 2 erforderliche Detektor 6 in dem Kühlschrank 1 angeordnet ist, in welchem das Produkt 2 ohnedies auf seinem Weg zum letztendlichen Verbrauch vorübergehend aufbewahrt wird. Besonders vorteilhaft ist es, wenn der Detektor 6 im Kühlschrank so angeordnet ist, dass er die Kennzeichnungen 3 schon dann detektieren kann, wenn die Produkte 2 wie üblich in den Kühlschrank gestellt werden, sodass also von Seiten von Personen kein separater Arbeitsschritt erforderlich ist.

Ein besonders hoher Wert der Erfindung ergibt sich dann, wenn die Datenbank 9, in welcher Kennzeichnung 3 eines Produktes 2 zur Echtheitsüberprüfung genutzt wird, zusätzlich dazu genutzt wird weitere Daten zu dem Produkt zu speichern. Idealerweise betrifft die Kennzeichnung 3 genau ein einziges individuelles Produkt, also beispielsweise genau eine einzige Getränkedose und nicht alle Getränkedosen einer ganzen Produktionscharge oder gar alle Getränkedosen welche bestimmungsgemäß gleich ausgebildet und befüllt sein sollten. Beträchtliche Vorteile ergeben sich aber auch, wenn die in einer Kennzeichnung 3 dargestellte Information zwar nicht nur für ein einziges individuelles Produkt gilt, sondern beispielsweise für alle Produkte, welche der gleichen Produktionscharge zuzurechnen sind, sodass also angenommen werden kann, die einzelnen Prozessschritte sind für alle individuellen Produkte der betreffenden Produktionscharge "genau" gleich abgelaufen.

Am Beispiel dass jedes einzelne Stück der Produkte 2 jeweils eine individuellen Kennzeichnung 3 (gemäß Fig. 1) aufweist, kann die Datenbank 9 gemäß einer vorteilhaften Ausführung Datensätze aufweisen, welche immer genau ein einzelnes Produkt (also z.B. genau eine einzige Getränkedose) betreffen, wobei die Datensätze beispielsweise jeweils die folgenden Informationen beinhalten:
- Inhalt des offensichtlichen Kennzeichnungselementes 4
- Inhalt des verschlüsselten Kennzeichnungselementes 3
- Zeitpunkt, Anlagenidentifikation, wesentliche Betriebsparameter bei der Oberflächenbeschichtung an der Innenseite der Verpackung
- Zeitpunkt, Anlagenidentifikation, wesentliche Betriebsparameter bei der Oberflächenbeschichtung an der Außenseite der Verpackung
- Zeitpunkt, Anlagenidentifikation, wesentliche Betriebsparameter bei der Befüllung der Verpackung.
- Zeitpunkt, Anlagenidentifikation, wesentliche Betriebsparameter beim Verschluss der Verpackung
- Zeitpunkt, Anlagenidentifikation, wesentliche Betriebsparameter beim Pasteurisieren des Produktes
- Informationen über das Lagern (Ort, Zeitpunkt Einlagern, Auslagern, Untere Temperatur, oberste Temperatur, zeitlicher Mittelwert der Temperatur)
- Informationen über Vertriebszwischenstationen (wann, wo, Transportarten, ggf. Temperaturinformationen)
- Zeitpunkt des Einlagerns im erfindungsgemäßen Kühlschrank
- Informationen über den Betrieb des Kühlschranks (Untere Temperatur, oberste Temperatur, zeitlicher Mittelwert der Temperatur)
- Information über die Entnahme aus dem Kühlschrank

Wie für Datenbanken üblich, sind dann aus den hinterlegten Datensätzen jene Datensätze wahlweise herausfilterbar, bei denen in wählbaren Zeilen des Datensatzes die dort hinterlegten Werte innerhalb eines wählbaren Bereiches liegen.

Die gespeicherten Informationen ermöglichen nicht nur die schon beschriebene Echtheitsprüfung, sondern auch in Streitfällen, typischerweise im Fall von behaupteten Produktmängeln, einen verlässlichen Nachweis, ob bei Herstellung und Vertrieb des Produktes durchwegs hochqualitativ gearbeitet wurde.

Beispielsweise können dann, wenn an einem bei einem Endkunden angekommenen einzelnen Produkt ein Mangel festgestellt wird, jene Produkte identifiziert werden, welche im gleichen Zeitbereich mit gleichen Betriebsparametern produziert und vertrieben wurden. Wenn bei keinem dieser weiteren Produkte der gleiche Mangel oder ein Hinweis darauf zu entdecken ist, so ist dies ein starker Hinweis darauf, dass der Mangel am erstgenannten Produkt im Verantwortungsbereich des Endkunden entstanden ist und nicht im Verantwortungsbereich des Herstellers oder des Vertriebes.

Beispielsweise können aber auch dann, wenn dem Hersteller oder einem Zwischenhändler im Nachhinein bekannt wird, dass es in einem bestimmten Zeitfenster an einer bestimmten Verarbeitungsanlage oder in einer bestimmten Vertriebsstation Probleme gab, die betroffenen Produkte identifiziert werden, und zum großen Teil auch noch gefunden werden, da ja auch die Vertriebsstrukturen hinterlegt sind und damit die Orte an denen sich die betroffenen Produkte befinden eingegrenzt werden können. Spätestens wenn ein betroffenes Produkt in einem Kühlschrank 1, welcher Teil des erfindungsgemäßen Systems ist, erkannt wird, kann durch die Datenbank 9 dazu an die Steuereinheit 7 am Kühlschrank 1 eine Warnung gesendet werden. Entweder über die lokale Steuereinheit 7 oder über einen anderen mehr oder minder automatisiert arbeitenden Informationsweg kann auch Personal informiert werden damit dieses die Auslieferung dieses Produktes verhindert.

Gemäß Fig. 2 sind Produkte 2, welche Getränkegebinde sein können, auf einer durchsichtigen Regalfläche 11 eines erfindungsgemäßen Kühlschranks 1 angeordnet, wobei die Türseite des Kühlschranks rechts liegt. Unterhalb der Regalfläche 11 befindet sich der Detektor 6. Der Detektor 6 ist in diesem Fall ähnlich wie bei einem aus dem Bürobereich bekannten Flachbettscanner als Kameraleiste 12 und einem diese bewegenden Transportmechanismus 13 ausgebildet. Bestimmungsgemäß wird während der Bildaufnahme die Kameraleiste 12 durch den Transportmechanismus 13 einer zur Regalfläche 11 parallelen Ebene bewegt. Kennzeichnungsinformationen für die Produkte 2 sind gemäß diesem Beispiel auf der Bodenfläche der Produkte 2 angebracht. Typischerweise dann, wenn die Tür des Kühlschranks 1 geschlossen wurde, wird ein Scanvorgang der Sicht auf die durchsichtige Regalfläche 11 von unten her durchgeführt, d.h. das sich von unten her ergebende Bild der durchsichtigen Regalfläche 11 wird durch die Kameraleiste 12 aufgenommen. Wie an sich für Flachbettscanner bekannt ist die Kameraleiste 12 typischerweise eine Zeilenkamera, das heißt ihre optische Detektorfläche ist in kleine Teilflächen aufgeteilt, welche entlang einer einzelnen Zeile hintereinander aufgefädelt sind. Für das Abbilden eines zweidimensionalen Objektes wird die Kameraleiste 12 normal zu ihrer Längsrichtung verschoben wobei wiederkehrend "eindimensionale" Teilbilder aufgenommen werden, die dann durch Software zu einem zweidimensionalen Gesamtbild zusammengestellt werden. Bevorzugt in der Steuerungs- und Kommunikationseinheit 7 (Fig. 1) wird die Bildinformation soweit ausgewertet, dass Kennzeichnungen 3 (Fig. 1) der einzelnen Produkte 2 identifiziert und gelesen werden. Wie oben beschrieben wird die gelesene Information an die Datenbank 9 (Fig. 1) gesandt und eine Information zurückerhalten, welche die Echtheit der einzelnen Produkte 2 ggf. bestätigt. Spätestens, wenn die Kühlschranktür geöffnet wird, wird für das der Tür am nächsten befindliche Produkt 2 das Signalelement 10 eingeschaltet, sodass ggf. dessen Echtheit signalisiert wird bzw. im gegenteiligen Fall eine Warnung signalisiert wird. Es ist vorteilhaft, wenn die Regalfläche 11 mit einer der an sich bekannten Vorrichtungen (nicht eingezeichnet) versehen ist, welche die auf der Regalfläche 11 befindlichen Produkte 2 selbsttätig auf die Entnahmeseite der Regalfläche 11 hinschiebt.

Der Kühlschrank 1 kann auch Teil eines Verkaufsautomaten sein. Die Signalisierung durch das Signalelement 10 hat dann immer das aktuell auszugebende Produkt 2 zu betreffen.

Im Rahmen des Erfindungsgedankens gibt es viele Abwandlungen zu den skizzierten Darstellungen. Beispielhaft seien erwähnt:
Die Regalfläche braucht gar nicht über ihre ganze Tiefe durchsichtig zu sein, es reicht, wenn ihr türseitiger Bereich durchsichtig ist. Der Detektor braucht von unten her dann auch nur am türseitigen Bereich der Regalfläche Bilder aufzunehmen.

Um die Durchsichtigkeit der Regalfläche zu erreichen braucht diese nicht unbedingt aus einem durchsichtigen Material, wie z.B. Glas, zu bestehen. Die Regelfläche kann stattdessen auch aus einem grobmaschigen Gitter gebildet sein.

Der an der Unterseite einer Regalfläche angeordnete optische Detektor, welcher nach Art eines Flachbettscanners eine Kameraleiste und einen diese bewegenden Transportmechanismus aufweist, kann auch nach unten hin ausgerichtet sein, sodass er von oben her ein Bild jener Produkte erstellt, welche auf der nächstunteren Regalfläche stehen.

Die Produkte 2 können an ihrer Oberseite und an ihrer Unterseite mit jeweils einem Identifikationsmerkmal versehen sein, sodass Kennzeichnungsinformation zu einem Produkt im Kühlschrank 1 sowohl durch einen von oben her aufnehmenden Detektor 6 und durch einen von unten her aufnehmenden Detektor auslesbar ist. Damit kann beispielsweise erreicht werden, dass ein Produkt 2 auch dann richtig identifiziert werden kann, wenn eines der beiden Identifikationsmerkmale im Lauf des Hantierens beschädigt -beispielsweise zerkratzt oder überdeckt - wurde. Zusätzlich kann natürlich auch Fälschungssicherheit erhöht werden, beispielsweise indem für die oben angebrachte Information eine andere Darstellungsart bzw. Verschlüsselung als für die unten angebrachte Information verwendet wird. Der ggf. an der Unterseite einer Regalfläche angeordnete optische Detektor, welcher nach Art eines Flachbettscanners eine Kameraleiste und einen diese bewegenden Transportmechanismus aufweist, kann dazu passend zwei Kameraleisten aufweisen, wobei die eine nach unten hin gerichtet ist und die andere nach oben hin.

Wie aus dem Stand der Technik für Kühlschränke an sich bekannt, können auch feststehende Kameras sowie Kameras, die an der beweglichen Kühlschranktür angeordnet sind, als optische Detektoren verwendet werden.

Die anhand von Fig. 2 beschriebene Einbauweise eines optischen Detektors 6 ist für die erfindungsgemäße Anwendung besonders vorteilhaft, weil damit sehr gut definierte - nämlich bei genau definierten Lichtverhältnissen und bei gleichbleibendem geringem Abstand - Aufnahmen der Unterseite von Produktverpackungen möglich sind, womit auch fein codierte Informationen verlässlich gut auslesbar sind.

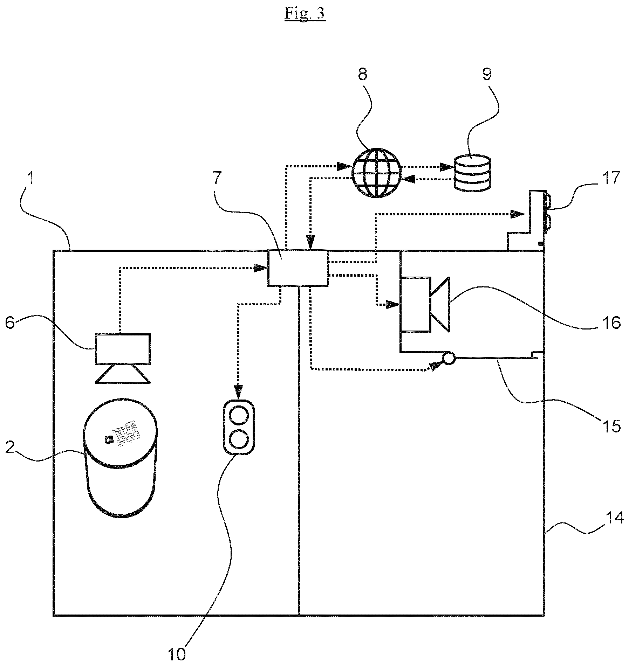

Fig. 3 zeigt ein Gerät, welches eine vorteilhafte Kombination aus einem erfindungsgemäßen Kühlschrank 1 und einer Vorrichtung 14 zur Rücknahme von Pfandverpackungen darstellt, wobei die Pfandverpackungen der Verpackungsteil von Produkten 2 sind, also wie die Produkte 2 auch eine Kennzeichnung 3 aufweisen.

Die Vorrichtung 14 zur Rücknahme von Pfandverpackungen umfasst einen Hohlraum zur Aufnahme der Pfandverpackungen sowie eine steuerbare Öffnung 15, durch welche hindurch gegebenenfalls eine Verpackung in den Hohlraum eingeworfen werden kann. Weiters umfasst die Vorrichtung 14 einen weiteren Detektor 16, welcher dem Detektieren von Kennzeichnungsinformation an rückzugebenden Pfandverpackungen dient. Weiters umfasst die Vorrichtung 14 auch eine Signal- und Bonausgabeeinheit 17.

Die Steuerungs- und Kommunikationseinheit 7 betreut an lokalen Elementen in diesem Fall nicht nur die im Kühlschrank 1 vorhandenen Elemente Detektor 6 und Signalelement 10, sondern auch die zur Vorrichtung 14 zur Rücknahme von Pfandverpackungen gehörenden Elemente Detektor 16, steuerbare Öffnung 15 und Bonausgabeeinheit 17.

Wenn ein mutmaßliches Pfandgebinde mit der Seite seiner Kennzeichnung voran an den Detektor 16 gehalten wird, so wird die Kennzeichnung detektiert und die relevante Information über die Steuerungs- und Kommunikationseinheit 7 und das Informationsnetzwerk 8 an die Datenbank 9 gesandt. Dort wird - wie zuvor für Produkte 2 beschrieben - überprüft, ob das Pfandgebinde echt ist, und zusätzlich, ob dafür noch kein Pfand ausbezahlt wurde. Das Ergebnis der Prüfung wird an die Steuerungs- und Kommunikationseinheit 7 zurückgemeldet. Wenn beide Fragestellungen mit 'Ja' beantwortet sind, wird durch die Steuerungs- und Kommunikationseinheit 7 die steuerbare Öffnung 15 in den Hohlraum geöffnet, sodass das Gebinde in den Hohlraum fällt und die Signal- und Bonusausgabeeinheit 17 wird dazu angewiesen zu signalisieren, dass die Rückgabe geklappt hat, und einen entsprechenden Bon auszugeben. (Das Ausgeben eines Bons braucht nicht unbedingt in Papierform zu geschehen, es kann auch auf digitalem Weg durch Schreiben einer Gutschrift auf ein Konto erfolgen.) Wenn zumindest eine der besagten Fragestellungen durch die Datenbank 9 mit 'Nein' beantwortet wurde, werden die Annahme des Pfandgebindes und das Ausgeben eines Bons verweigert.

Im positiven Fall wird in der Datenbank 9 hinterlegt, dass das Pfandgebinde abgegeben und eine Bonausgabe dazu angewiesen wurde. Durch diese hinterlegte Information kann verhindert werden, dass für die gleiche Verpackung mehrmals Rückgabepfand ausgegeben wird.

Gemäß einer vorteilhaften Weiterentwicklung der Erfindung werden die im Kühlschrank 1 erfindungsgemäß verwendeten Detektoren 6 und die Steuerungs- und Kommunikationseinheit 7 sowie das Informationsnetzwerk 8 zusätzlich zu den beschriebenen erfindungsgemäßen Verwendungen auch dazu verwendet, berechtigte Benutzer des Kühlschranks 1 mit Informationen über den Inhalt des Kühlschranks 1 zu informieren - wie dies Eingangs als Stand der Technik beschrieben wurde.

Gemäß einer vorteilhaften Variation der Erfindung ist der erfindungsgemäß verwendete Kühlschrank Teil eines Verkaufsautomaten. Demgemäß ist eine Vorrichtung für das Bezahlen von Ware und eine Ausgabevorrichtung für im Kühlschrank enthaltene Produkte vorhanden, welche so zusammenwirken, dass dann, wenn ein Produkt bezahlt wurde, dieses automatisch ausgegeben wird. Vor oder während des Ausgebens kann das Produkt wie beschrieben auf Echtheit geprüft werden. Sofern das System wie an Hand von Fig. 3 beschrieben auch eine Vorrichtung zur Rücknahme von Pfandverpackungen umfasst, kann bei der Bezahlung von zu entnehmenden Produkten auch der durch die Rückgabe von Pfandgebinden erstandene Betrag abgerechnet werden.

Gemäß einer Weiterentwicklung dazu umfasst das System auch einen Detektor für das Erkennen von registrierten Kunden beispielsweise an Hand einer Kundenkarte oder eines Identifikationsroutine die unter Austausch von Funksignalen zwischen dem Detektor und dem Smartphone des Kunden abläuft. Dann können Produktkäufe und Rückgaben von Pfandgebinden individuellen Kunden zugeordnet werden und auch einzelnen Kunden individuell zugeordnete Bedingungen für Produktkosten, Bezahlungsarten, Bonusse etc. berücksichtigt werden. Die als geordnete Sammlung von digitalen Datensätzen ausgebildeten Kundenkonten können beispielsweise ebenfalls in der Datenbank 9 angesiedelt sein und die Datenübertragung erfolgt idealerweise ebenfalls über die Steuerungs-und Kommunikationseinheit (7) und das damit verbundene Informationsnetzwerk (8) (Fig. 1, Fig. 3).

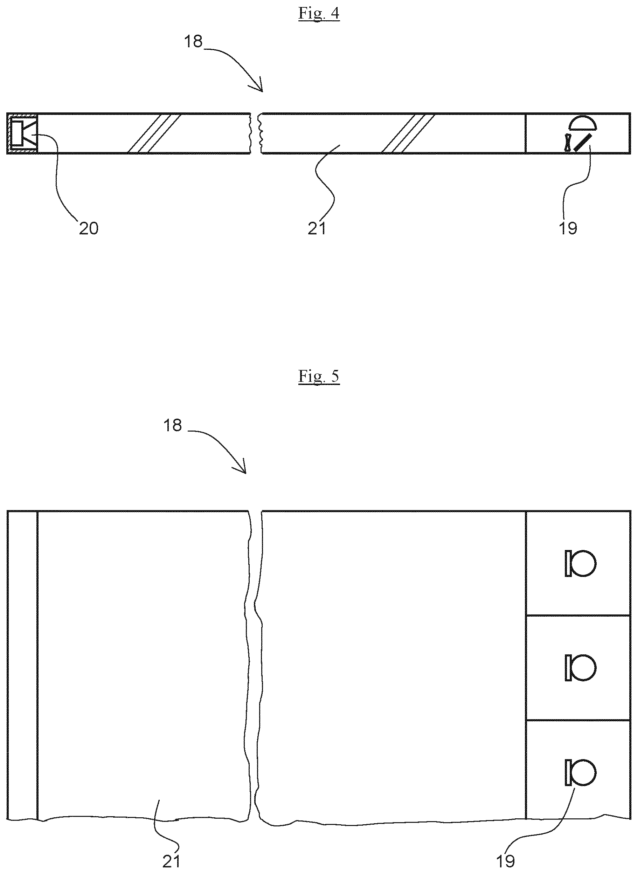

Fig. 4 und Fig. 5 veranschaulichen eine erfindungsgemäß verwendbare Regalfläche 18, in welcher eine Reihe von Optikbaugruppen 19, eine Reihe von Detektoren 20 und ein dazwischenliegender Lichtübertragungsbereich 21 zu einer brettartigen Struktur idealerweise flächenbündig zusammengefasst sind, sodass sie eine Fläche bilden, auf welche Produkte 2 (gemäß den vorigen Zeichnungen) gestellt werden können.

Eine Optikbaugruppe 19 umfasst Linsen, und/oder Spiegel/ und/oder lichtdurchlässige Prismen, welche in ein lichtleitendes, schützendes Medium eingebettet sind. Ihr Zweck ist es, von der Oberseite der Regalfläche 18 kommendes Licht zu bündeln und in ein Strahlenbündel umzulenken, welches im Wesentlichen parallel zur Regalfläche, von der Entnahmeseite des Kühlschranks weg gerichtet ist. Das Strahlenbündel durchdringt dann den Lichtübertragungsbereich 21, welcher einfach durch eine ebene Glasplatte gebildet sein kann, und gelangt letztendlich an die Detektoren 20, welche typischerweise kleine Kameras sind und an der den Optikbaugruppen 19 gegenüberliegenden Seite der Regalfläche 18 in einer Reihe nebeneinander angeordnet sind. Bestimmungsgemäß werden auf die Regalfläche Produkte 2 gestellt, und ein entnahmeseitig befindliches Produkt 2 steht genau auf einer Optikbaugruppe 19, sodass durch diese die Unterseite des Produktes 2 aufgenommen wird. Es ist vorteilhaft, in der Reihe von Detektoren 20 auch eine oder mehrere Lichtquellen anzuordnen, welche Licht über den Lichtübertragungsbereich 21 und die Optikbaugruppen 19 ggf. an die Unterseite der auf diesen stehenden Produkte senden.

Regalflächen 18 gemäß Fig. 4 und 5 und auch die nachfolgenden besprochenen Abwandlungen dazu sind optisch schön und durch ihre Anwendung kann ein herkömmlicher Kühlschrank recht einfach zu einem Kühlschrank mit Datenerfassung bezüglich der Produkte 2 aufgerüstet werden - auch dann wenn der Kühlschrank nicht zur Echtheitsprüfung der Produkte 2 gemäß der vorliegenden Erfindung oder zur Erfassung von Vertriebsdaten bezüglich der Produkte verwendet wird.

Zur besprochenen Bauweise gemäß Fig. 4 und Fig. 5 seien kurz an verwandten Bauweisen erwähnt:
- Die Lichtübertragung von einer Optikbaugruppe 19 zu einem Detektor 20 kann auch über faserförmige Lichtleiter erfolgen, welche in oder an einem flächigen, mechanisch tragenden Regalbereich angeordnet sind.
- Ein optischer Detektor 20 kann auch direkt in einer Optikbaugruppe 19 integriert sein, und damit auch unterhalb des jeweils aufgenommen Produktes angeordnet sein. Bevorzugt an der Unterseite der restlichen Regalfläche ist dann eine Verkabelung für die Energieversorgung und die Datenübertragung anzubringen.

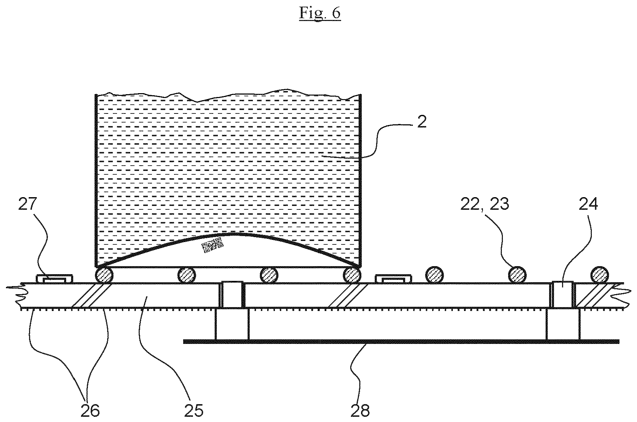

Fig. 6 zeigt ein erfindungsgemäß verwendbares Regalfach 22, welches durch ein Gitter aus horizontal verlaufenden Stäben 23 realisiert ist, auf deren Oberseite das Produkt 2 steht. Es werden mehrere Detektoren 24 verwendet, welche in diesem Fall stillstehende kleine optische Kameras sind, welche nach oben hin ausgerichtet sind, wobei sich ihr Sichtbereich sich durch den Zwischenraum zwischen benachbarten Stäben 23 nach oben hin, auf die Unterseite des ggf. dort befindlichen Produktes 2 erstreckt. Die Kameras, welche die Detektoren 24 darstellen sind in diesem Fall - wie auch im Fall der Detektoren 20 gemäß Fig. 4 - sogenannte Flächenkameras, also "übliche" Kameras, deren optisch empfindliche Schicht durch einen zweidimensionalen Raster von einzelnen optischen Sensorzellen (sog. Pixeln) gebildet ist.

Oftmals ergeben sich bei der Anwendung von optischen Detektoren die sich im Nahbereich der zu erfassenden Oberfläche befinden, erhebliche Schwierigkeiten dadurch, dass die zu erfassende Oberfläche des Objektes Licht nicht gleichmäßig diffus reflektiert, sondern zu einem erheblichen Anteil auch geordnet reflektiert, also spiegelt. Dadurch gibt es immer auch Flächenbereiche, von welchen aus eine Art Spiegelbild der Lichtquelle auf die Detektorfläche reflektiert wird. Analog zur Blendwirkung beim menschlichen Auge führt das dann häufig dazu, dass die zu erkennende Struktur oft nicht erkannt werden kann, weil die Kontraste in der zu erkennenden Struktur viel geringer sind als die Kontraste zwischen Flächenteilen von denen aus ein Spiegelbild der Lichtquelle auf den Detektor gespiegelt wird und jenen Flächenteilen von denen nur diffus Licht auf den Detektor gestreut wird. Ganz besonders stark treten derart störende Effekte auf wenn konkav gewölbte Blechflächen - wie sie an der Unterseite von Getränkedosen vorkommen - abgebildet werden sollen. Fig. 6 veranschaulicht eine sehr innovative Methode der Beleuchtung mit Hilfe derer bei dieser Problematik Abhilfe geschaffen wird:
An der Unterseite der im Wesentlichen durchsichtigen Regalfläche 22 ist parallel zu dieser eine Scheibe 25 angeordnet, welche aus einem durchsichtigen Material wie typischerweise klarem Glas oder klarem Acrylglas besteht. Zumindest eine der beiden zur Scheibenebene parallel liegenden Oberflächen der Scheibe 25 ist mit einem Raster von Flächenstücken 26 versehen, welche ankommendes Licht diffus reflektieren. Diese Flächenstücke 26 können durch eine in kleinen Flächen aufgebrachte Beschichtung aus einem diffus reflektierenden Material oder durch raue Bereiche der Scheibenoberfläche gebildet sein. Raue Bereiche der Scheibenoberfläche können durch chemisches Ätzen oder durch mechanische Bearbeitung oder durch Laserbehandlung einer vorher glatten Scheibenoberfläche gebildet sein. Die nicht als diffus reflektierende Flächenstücke 26 ausgebildete Oberfläche der Scheibe ist so wie bei übliche Klarglasoberflächen eben, glatt und lichtdurchlässig ausgebildet. Beispielsweise kann eine Seite der Scheibe 25 gar keine diffus reflektierende Flächenstücken 26 aufweisen, und auf der zweiten Seite der Scheibe sind in Summe 10% der Fläche mit diffus reflektierenden Flächenstücken 26 versehen.

An Teilflächen der Scheibe 25 sind Lichtquellen 27 angebracht, welche Licht in das Volumen der Scheibe 25 hinein strahlen. Im gezeigten vorteilhaften Fall weist nur an einer Seite der Scheibe 25 reflektierende Flächenstücken 26 auf, und die Lichtquellen 27 liegen an der gegenüberliegenden Seite der Scheibe 25 an dieser an. Es wäre aber auch möglich, Licht von deren Stirnseiten her in die Scheibe 25 einzukoppeln.

Mit der Bauweise wird erreicht, dass die Scheibe 25 wie eine extrem großflächige, extrem gleichmäßig diffus strahlende Lichtquelle Licht abgibt und damit die Unterseite des ggf. vorhandenen Produktes 2 beleuchtet. Der unterhalb des Produktes 2 befindliche optische Detektor 24 kann damit ein Bild dieser Unterseite aufnehmen, welches nicht durch Teilflächenbereiche die durch Spiegelung überbelichtet sind, gestört ist.

Vor allem wegen dem besseren Schutz vor Verschmutzung ist bevorzugt nur die Unterseite der Scheibe 25 mit diffus reflektierende Flächenstücken 26 versehen.

Wie skizziert befinden sich die elektronische Versorgungsbaugruppe 28 - welche beispielsweise eine Platine sowie elektrische Leitungen für die Stromversorgung und eine Leitungsverbindung für die Datenübertragung - aufweisen kann, an der Unterseite der Scheibe 25.

Dazu weiter bevorzugt ist die Scheibe 25 an jenen Stellen, an welchen sich ein optischer Detektor 24 befindet durchbrochen, sodass der direkte Lichtweg von der abzubildenden Oberfläche des Produktes zur Lichteinfallsfläche des optischen Detektors 24 nicht durch Material der Scheibe 25 verläuft.

Gemäß einer Abwandlung der Bauweise von Fig. 6 ist die Regalfläche auf welcher das Produkt 2 trägt, durch eine durchsichtige Glasscheibe gebildet und die Scheibe 25, welche zur Beleuchtung dient und mit diffus reflektierende Flächenstücken 26 versehen ist, befindet sich unterhalb dieser tragenden Scheibe.

Gemäß einer weiteren Abwandlung der Bauweise von Fig. 6 ist die Scheibe 25, welche zur Beleuchtung dient und mit diffus reflektierende Flächenstücken 26 versehen ist, gleichzeitig jene Regalfläche, welche das Produkt 2 trägt und auf deren Oberseite das Produkt 2 steht. In diesem Fall ist es besonders wichtig, dass sich die diffus reflektierende Flächenstücke 26 auf der Unterseite der Scheibe 25 befinden.

Die anhand von Fig. 6 besprochene Bauweise ist ebenso wie die dazu besprochenen Abwandlungen ganz allgemein - also nicht nur innerhalb eines System für die Echtheitsprüfung von Produkten - vorteilhaft dazu verwendbar, Güter, welche auf einer Regalfläche stehen, von unten her durch einen optischen Detektor zu erfassen.

## Patentansprüche

1. System für die Echtheitsprüfung eines Produktes (2), gemäß welchem das Produkt (2) mit einer Kennzeichnung (3) versehen ist, deren Information durch einen Detektor (6, 16, 20, 24) ausgelesen wird und über eine Steuerungs- und Kommunikationseinheit (7), welche den Detektor (6, 16, 20, 24) und ein Signalelement (10) steuert, und ein mit der Steuerungs- und Kommunikationseinheit (7) verbundenes Informationsnetzwerk (8) an eine Datenbank (9) gesandt wird und mit dort hinterlegten Informationen abgeglichen wird, wobei als ein Ergebnis des Abgleichs eine Entscheidung bezüglich Echtheit oder Unechtheit des Produktes (2) generiert wird und das Ergebnis dieser Entscheidung am Ort des Produktes (2) durch das Signalelement (10) signalisiert wird,
**dadurch gekennzeichnet, dass**
- das System einen Kühlschrank (1) umfasst, in dem der Detektor (6) angeordnet ist und der die Steuerungs- und Kommunikationseinheit (7) und das Signalelement (10) umfasst,
- wobei das Produkt (2) ein verpacktes Lebensmittel ist und in dem Kühlschrank (1) platziert ist,
- und dass der Kühlschrank (1) eine durchsichtige Regalfläche (11, 22) aufweist und der Detektor (6) eine Kameraleiste (12) umfasst,
- die an einer Unterseite der Regalfläche (11, 22) angeordnet ist und durch einen Transportmechanismus (13) parallel zur Ebene der Regalfläche (11, 22) bewegbar ist,
- wobei die Kameraleiste (12) zur Aufnahme von Bildern der auf der Regalfläche (11, 22) befindlichen Produkte (2) von der Unterseite her ausgerichtet ist.

2. System nach Anspruch 1, **dadurch gekennzeichnet, dass** in der Datenbank (9) vermerkt wird, von welcher Steuerungs- und Kommunikationseinheit (7), wann welche Informationen aus Kennzeichnungen (3) übersandt wurden.

3. System nach Anspruch 1 oder 2, **dadurch gekennzeichnet, dass** der Kühlschrank eine Regalfläche (18) aufweist, in welche der als optischer Detektor ausgebildete Detektor (20) flächenbündig integriert ist.

4. System nach Anspruch 3, **dadurch gekennzeichnet, dass** in die Regalfläche (18) eine Optikbaugruppe (19) flächenbündig integriert ist, welche Licht von der Oberseite der Regalfläche (18) an den Detektor (20) lenkt.

5. System nach Anspruch 4, **dadurch gekennzeichnet, dass** die Lichtübertragung zwischen er Optikbaugruppe (19) und dem Detektor (20) über einen lichtleitenden Festkörper erfolgt.

6. System nach Anspruch 1 oder 2, **dadurch gekennzeichnet, dass** parallel zur Ebene der Regalfläche (11, 22) eine aus durchsichtigem Material bestehende Scheibe (25) verläuft von welcher mindestens eine der beiden zur Scheibenebene parallel liegenden Oberflächen mit einem Raster von Flächenstücken (26) versehen ist, welche ankommendes Licht diffus reflektieren, wobei nicht mit den Flächenstücken (26) versehenen Bereiche der Oberflächen der Scheibe eben, glatt und lichtdurchlässig ausgebildet sind, und wobei eine oder mehrere Lichtquellen (27) Licht in das Material der Scheibe (25) einstrahlen.

7. System nach Anspruch 6, **dadurch gekennzeichnet, dass** die Scheibe (25) unterhalb der Regalfläche (11, 22) angeordnet ist.

8. System nach Anspruch 6, **dadurch gekennzeichnet, dass** die Scheibe (25) selbst die Regalfläche ist.

9. System nach einem der Ansprüche 6 bis 8, **dadurch gekennzeichnet, dass** sich die diffus reflektieren Flächenstücke (26) an der unteren Oberfläche der Scheibe (25) befinden, dass sich eine Versorgungsbaugruppe (28) für den Detektor (24) unterhalb der Scheibe (25) befindet, und dass die Scheibe (25) an jener Stelle, an welcher sich der Detektor (24) befindet, durchbrochen ist.

10. System nach einem der Ansprüche 1 bis 9, **dadurch gekennzeichnet, dass** Detektor (6, 16, 20, 24), Steuerungs- und Kommunikationseinheit (7) und Informationsnetzwerk (8) auch dazu verwendet werden, berechtigte Benutzer des Kühlschranks (1) mit Informationen über den Inhalt des Kühlschranks (1) zu versorgen.

11. System nach einem der Ansprüche 1 bis 10, **dadurch gekennzeichnet, dass** das Informationsnetzwerk (8) das Internet ist.

12. System nach einem der Ansprüche 1 bis 11, **dadurch gekennzeichnet, dass** der Kühlschrank (1) mit einer Vorrichtung (14) zur Rücknahme von Pfandverpackungen kombiniert ist, wobei die Pfandverpackungen der mit der Kennzeichnung (3) versehene Verpackungsteil von Produkten (2) sind, wobei die Vorrichtung (14) einen Detektor (16) umfasst, welcher die Kennzeichnung ausliest und über eine Steuerungs- und Kommunikationseinheit (7), welche den Detektor (6, 16) und ein Signalelement (10) steuert, und diese über die Steuerungs- und Kommunikationseinheit (7) und das Informationsnetzwerk (8) an die Datenbank (9) gesandt wird und durch Abgleich von Daten die in der Datenbank (9) hinterlegt sind, eine Entscheidung generiert wird, ob die Pfandverpackungen echt ist und ob dafür nicht schon früher Pfand ausbezahlt wurde.

13. System nach einem der Ansprüche 1 bis 12, **dadurch gekennzeichnet, dass** in der Datenbank (9) Datensätze generiert werden, welche zu den mit individuellen Kennzeichnungen (3) gekennzeichneten Produkten (2) Daten bezüglich Herstellungsparametern enthalten.

14. System nach einem der Ansprüche 1 bis 13, **dadurch gekennzeichnet, dass** in der Datenbank (9) Datensätze generiert werden, welche zu den mit individuellen Kennzeichnungen (3) gekennzeichneten Produkten (2) Daten bezüglich einzelner Herstellungsschritte enthalten.

15. System nach einem der Ansprüche 1 bis 14, **dadurch gekennzeichnet, dass** in der Datenbank (9) Datensätze generiert werden, welche zu den mit individuellen Kennzeichnungen (3) gekennzeichneten Produkten (2) Daten bezüglich des Vertriebsweges enthalten.

16. System nach Anspruch 14 oder 15, **dadurch gekennzeichnet, dass** nach der Identifizierung eines Produktes (2) in einem Kühlschrank (1) anhand der Kennzeichnung (3) und der Erfüllung von in der Datenbank (9) hinterlegten Filterbedingungen durch die Datenbank (9) eine Warnung vor der Verwendung des Produktes (2) und/oder eine Produkt-Rückrufinformation das Produkt (2) betreffend generierbar und an die Steuerungs- und Kommunikationseinheit (7) im Kühlschrank (1) sendbar ist.

17. System nach einem der Ansprüche 1 bis 16, **dadurch gekennzeichnet, dass** der Kühlschrank (1) Teil eines Verkaufsautomaten ist.

18. System nach Anspruch 17, **dadurch gekennzeichnet, dass** im Bereich des Kühlschranks (1) ein Detektor für das Erkennen von registrierten Kunden vorhanden ist, dass Produktkäufe und ggf. Pfandrückgaben den jeweiligen Konten von jeweils erkannten Kunden zugordnet werden, und dass der Informationsaustausch zwischen einer Datenbank welche die Kundenkontenkonten enthält, und dem Detektor für das Erkennen von registrierten Kunden, über die Steuerungs- und Kommunikationseinheit (7) und das damit verbundene Informationsnetzwerk (8) erfolgt.

19. System nach einem der Ansprüche 1 bis 18, **dadurch gekennzeichnet, dass** die Kennzeichnung (3) am Produkt (2) sowohl an dessen oberen Seite als auch an dessen unterer Seite angebracht ist, und im Kühlschrank (1) jede der beiden Kennzeichnungen (3) auslesbar ist.

## Claims

1. A system for checking the authenticity of a product (2), according to which the product (2) is provided with an identification (3), the information of which is read out by a detector (6, 16, 20, 24) and is transmitted to a database (9) via a control and communication unit (7) which controls the detector (6, 16, 20, 24) and a signal element (10), and an information network (8) connected to the control and communication unit (7) and is compared with information stored there, wherein a decision regarding the authenticity or inauthenticity of the product (2) is generated as a result of the comparison and the result of this decision is signaled at the location of the product (2) by the signal element (10),
**characterized in that**
- the system comprises a refrigerator (1), in which the detector (6) is arranged and which comprises the control and communication unit (7) and the signal element (10),
- wherein the product (2) is a packaged foodstuff and is placed in the refrigerator (1),
- and that the refrigerator (1) has a transparent shelf surface (11, 22) and the detector (6) comprises a camera bar (12),
- which is arranged on an underside of the shelf surface (11, 22) and is movable by a transport mechanism (13) parallel to the plane of the shelf surface (11, 22),
- wherein the camera bar (12) is configured to capture images of the products (2) located on the shelf surface (11, 22) from the underside.

2. The system according to claim 1, **characterized in that** it is noted in the database (9) from which control and communication unit (7) which information from identifications (3) was transmitted and when.

3. The system according to claim 1 or 2, **characterized in that** the refrigerator has a shelf surface (18) in which the detector (20), which is designed as an optical detector, is integrated flush with the surface.

4. The system according to claim 3, **characterized in that** an optical assembly (19) is integrated flush with the shelf surface (18), the optical assembly (19) directing light from the top of the shelf surface (18) to the detector (20).

5. The system according to claim 4, **characterized in that** the light transmission between the optical assembly (19) and the detector (20) is carried out via a light-conducting solid body.

6. The system according to claim 1 or 2, **characterized in that**, a pane (25) consisting of transparent material extends parallel to the plane of the shelf surface (11, 22), wherein at least one of the two surfaces of the pane (25) lying parallel to the plane of the pane is provided with a grid of surface pieces (26) which diffusely reflect incoming light, wherein regions of the surfaces of the pane not provided with the surface pieces (26) are formed to be flat, smooth and translucent, and wherein one or more light sources (27) radiate light into the material of the pane (25).

7. The system according to claim 6, **characterized in that** the pane (25) is arranged below the shelf surface (11, 22).

8. The system according to claim 6, **characterized in that** the pane (25) itself is the shelf surface.

9. The system according to any one of claims 6 to 8, **characterized in that** the diffusely reflecting surface pieces (26) are located on the lower surface of the pane (25), that a supply assembly (28) for the detector (24) is located below the pane (25), and that the pane (25) is perforated at the location where the detector (24) is located.

10. The system according to any one of claims 1 to 9, **characterized in that** detector (6, 16, 20, 24), control and communication unit (7) and information network (8) are also used to provide authorized users of the refrigerator (1) with information about the contents of the refrigerator (1).

11. The system according to any one of claims 1 to 10, **characterized in that** the information network (8) is the Internet.

12. The system according to any one of claims 1 to 11, **characterized in that** the refrigerator (1) is combined with a device (14) for taking back deposit packages, the deposit packages being the packaging part of products (2) provided with the identification (3), the device (14) comprising a detector (16) which reads the identification, the information from which is transmitted to the database (9) via a control and communication unit (7), which controls the detector (6, 16) and a signal element (10), and via the information network (8), and by comparing data stored in the database (9) a decision is generated as to whether the deposit packaging is genuine and whether a deposit has not already been paid out for it.

13. The system according to any one of claims 1 to 12, **characterized in that**, in the database (9), data records are generated which contain data relating to manufacturing parameters for the products (2) marked with individual identifications (3).

14. The system according to any one of claims 1 to 13, **characterized in that**, in the database (9), data records are generated which contain data relating to individual manufacturing steps for the products (2) marked with individual identifications (3).

15. The system according to any one of claims 1 to 14, **characterized in that**, in the database (9), data records are generated which contain data relating to the distribution channel for the products (2) marked with individual identifications (3).

16. The system according to claim 14 or 15, **characterized in that**, after identification of a product (2) in a refrigerator (1) on the basis of the identification (3) and fulfillment by the database (9) of filter conditions stored in the database (9), a warning against use of the product (2) and/or product recall information relating to the product (2) can be generated and transmitted to the control and communication unit (7) in the refrigerator (1).

17. The system according to any one of claims 1 to 16, **characterized in that** the refrigerator (1) is part of a vending machine.

18. The system according to claim 17, **characterized in that** a detector for recognizing registered customers is present in the area of the refrigerator (1), that product purchases and, if applicable, deposit returns are assigned to the respective accounts of respectively recognized customers, and that the exchange of information between a database containing the customer accounts and the detector for recognizing registered customers takes place via the control and communication unit (7) and the information network (8) connected thereto.

19. The system according to any one of claims 1 to 18, **characterized in that** the identification (3) on the product (2) is affixed to both its upper side and its lower side, and that each of the two identifications (3) can be read out in the refrigerator (1).

## Revendications

1. Système de vérification de l'authenticité d'un produit (2), selon lequel le produit (2) est muni d'un marquage (3) dont les informations sont lues grâce à un détecteur (6, 16, 20, 24) et envoyées à une base de données (9) par l'intermédiaire d'une unité de commande et de communication (7), qui commande le détecteur (6, 16, 20, 24) et un élément de signalement (10), et d'un réseau d'information (8) connecté à l'unité de commande et de communication (7), et sont comparées avec les informations qui y sont stockées, dans lequel une décision quant à l'authenticité ou l'inauthenticité du produit (2) est générée en conséquence de la comparaison et le résultat de ladite décision est signalé à l'emplacement du produit (2) grâce à l'élément de signalement (10),
**caractérisé en ce que**
- le système comprend un réfrigérateur (1), au sein duquel est agencé le détecteur (6) et qui comprend l'unité de commande et de communication (7) et l'élément de signalement (10),
- dans lequel le produit (2) est un aliment emballé et est placé dans le réfrigérateur (1),
- et **en ce que** le réfrigérateur (1) présente une surface d'étagère transparente (11, 22) et le détecteur (6) comprend une barre de caméra (12),
- qui est agencée sur une face inférieure de la surface d'étagère (11, 22) et peut être déplacée grâce à un mécanisme de transport (13) parallèlement au plan de la surface d'étagère (11, 22),
- dans lequel la barre de caméra (12) est orientée depuis la face inférieure afin de prendre des photos des produits (2) se trouvant sur la surface d'étagère (11, 22).

2. Système selon la revendication 1, **caractérisé en ce que** la base de données (9) enregistre quelle unité de commande et de communication (7) a transmis quelles informations à partir des marquages (3) et quand.

3. Système selon la revendication 1 ou 2, **caractérisé en ce que** le réfrigérateur présente une surface d'étagère (18) dans laquelle le détecteur (20) réalisé sous la forme d'un détecteur optique est intégré de manière à affleurer la surface.

4. Système selon la revendication 3, **caractérisé en ce qu'**un module optique (19) dirigeant la lumière vers le détecteur (20) depuis le haut de la surface d'étagère (18), est intégré dans la surface d'étagère (18) de manière à affleurer la surface.

5. Système selon la revendication 4, **caractérisé en ce que** la transmission de lumière entre le module optique (19) et le détecteur (20) intervient par l'intermédiaire d'un corps solide conducteur de lumière.

6. Système selon la revendication 1 ou 2, **caractérisé en ce que** parallèlement au plan de la surface d'étagère (11, 22) s'étend un disque (25) constitué d'un matériau transparent et dont au moins une des deux surfaces parallèles au plan de disque est munie d'une trame de pièces de surface (26) qui réfléchissent de manière diffuse la lumière entrante, dans lequel des régions des surfaces du disque qui ne sont pas munies des pièces de surface (26) sont réalisées de manière plane, lisse et translucide, et dans lequel une ou plusieurs sources de lumière (27) émette(nt) de la lumière dans le matériau du disque (25).

7. Système selon la revendication 6, **caractérisé en ce que** le disque (25) est agencé en-dessous de la surface d'étagère (11, 22).

8. Système selon la revendication 6, **caractérisé en ce que** le disque (25) lui-même constitue la surface d'étagère.

9. Système selon l'une quelconque des revendications 6 à 8, **caractérisé en ce que** les pièces de surface (26) réfléchissantes de manière diffuse se trouvent au niveau de la surface inférieure du disque (25), **en ce qu'**un module d'alimentation (28) destiné au détecteur (24) se trouve en-dessous du disque (25), et **en ce que** le disque (25) est percé à l'endroit où se trouve le détecteur (24).

10. Système selon l'une quelconque des revendications 1 à 9, **caractérisé en ce que** le détecteur (6, 16, 20, 24), l'unité de commande et de communication (7) et le réseau d'information (8) sont également utilisés pour fournir aux utilisateurs autorisés du réfrigérateur (1) des informations sur le contenu du réfrigérateur (1).

11. Système selon l'une quelconque des revendications 1 à 10, **caractérisé en ce que** le réseau d'information (8) est l'Internet.

12. Système selon l'une quelconque des revendications 1 à 11, **caractérisé en ce que** le réfrigérateur (1) est combiné avec un dispositif (14) permettant de reprendre des emballages consignés, dans lequel les emballages consignés représentent la partie d'emballage des produits (2) qui est munie du marquage (3), dans lequel le dispositif (14) comprend un détecteur (16) qui lit le marquage et, par l'intermédiaire d'une unité de commande et de communication (7) qui commande le détecteur (6, 16) et un élément de signalement (10), envoie ledit marquage à la base de données (9) par l'intermédiaire de l'unité de commande et de communication (7) et du réseau d'information (8), et, grâce à une comparaison avec les données qui sont stockées dans la base de données (9), une décision est générée quant à l'authenticité des emballages consignés et quant au paiement préalable ou non de la consigne.

13. Système selon l'une quelconque des revendications 1 à 12, **caractérisé en ce que** des jeux de données, qui contiennent des données concernant les paramètres de fabrication à propos des produits (2) marqués avec des marquages (3) individuels, sont générés dans la base de données (9).

14. Système selon l'une quelconque des revendications 1 à 13, **caractérisé en ce que** des jeux de données, qui contiennent des données concernant des étapes de fabrication individuelles à propos des produits (2) marqués avec des marquages (3) individuels, sont générés dans la base de données (9).

15. Système selon l'une quelconque des revendications 1 à 14, **caractérisé en ce que** des jeux de données, qui contiennent des données concernant le canal de distribution à propos des produits (2) marqués avec des marquages (3) individuels, sont générés dans la base de données (9).

16. Système selon la revendication 14 ou 15, **caractérisé en ce que**, après l'identification d'un produit (2) dans un réfrigérateur (1) à l'aide du marquage (3) et après la satisfaction, par la base de données (9), des conditions de filtrage stockées dans la base de données (9), un avertissement précédant l'utilisation du produit (2) et/ou une information de rappel de produit concernant le produit (2) peu(ven)t être généré(s) et être envoyé(s) à l'unité de commande et de communication (7) du réfrigérateur (1).

17. Système selon l'une quelconque des revendications 1 à 16, **caractérisé en ce que** le réfrigérateur (1) fait partie d'un distributeur automatique.

18. Système selon la revendication 17, **caractérisé en ce qu'**un détecteur destiné à l'identification des clients enregistrés est présent dans la région du réfrigérateur (1), **en ce que** des achats de produits et éventuellement des restitutions de consigne sont associés aux comptes respectifs des clients respectivement identifiés, et **en ce que** l'échange d'informations entre une base de données contenant les comptes clients et le détecteur destiné à l'identification des clients enregistrés intervient par l'intermédiaire de l'unité de commande et de communication (7) et du réseau d'information (8) qui lui est connecté.

19. Système selon l'une quelconque des revendications 1 à 18, **caractérisé en ce que** le marquage (3) est apposé sur le produit (2) à la fois sur sa face supérieure et sur sa face inférieure, et chacun des deux marquages (3) peut être lu dans le réfrigérateur (1).
